# EUROPÄISCHE PATENTANMELDUNG

(11) **EP 1 780 344 A2**
(43) Veröffentlichungstag der Anmeldung: **02.05.2007**
(21) Anmeldenummer: 06022106.6
(22) Anmeldetag: 21.10.2006
(51) Int. Cl.: E03F 7/10

(54) **Vorrichtung zur Gruben- und/oder Kanalreinigung**

(30) Priorität: 31.10.2005 DE 102005052393
(71) Anmelder: Wiedemann, Karl, 86450 Altenmünster (DE)
(72) Erfinder: Wiedemann, Karl, 86450 Altenmünster (DE)
(74) Vertreter: Munk, Ludwig

(57) **Zusammenfassung**

Bei einer Vorrichtung zur Kanal- und/oder Grubenreinigung, insbesondere Kanalreinigungsfahrzeug, mit einem vorzugsweise evakuierbaren, mit aufsaugbarem Schlamm beaufschlagbaren Schlammbehälter (2), einem mittels einer am Ausgang des Schlammbehälters (2) angeordneten Filtereinrichtung mit gefiltertem Wasser aus dem Schlammbehälter (2) beaufschlagbaren Wasserbehälter (6) und einem mittels einer Wasseraufbereitungseinrichtung, die eine durch eine saugseitig an den Wasserbehälter (6) angeschlossene Niederdruckpumpe (7) mit Wasser beaufschlagbare Zyklonanordnung (8) enthält, mit aufbereitetem Spülwasser aus dem Wasserbehälter (6) beaufschlagbaren Wasservorlageraum (10) für eine Hochdruckpumpe (11), durch die ein Räumschlauch (12) mit Spülwasser beaufschlagbar ist, lassen sich dadurch eine kontinuierliche Betriebsweise sowie eine einfache Bauweise erreichen, dass der Schlammbehälter (2) und der Wasserbehälter (6) einander benachbart angeordnet und mittels einer Durchtrittsöffnung (15) in einer gemeinsamen Trennwand (5) strömungsmäßig miteinander verbunden sind und dass die am Ausgang des Schlammbehälters (2) vorgesehene Filtereinrichtung eine der Durchtrittsöffnung (15) zugeordnete Filterwand (14) enthält, der schlammbehälterseitig ein an- und abstellbarer Deckel (16) und gegenüberliegend eine Reinigungseinrichtung (18) zugeordnet sind.

## Beschreibung

Die Erfindung betrifft eine Vorrichtung zur Gruben- und/oder Kanalreinigung mit einem vorzugsweise evakuierbaren, mit aufsaugbarem Schlamm beaufschlagbaren Schlammbehälter, einem mit mittels einer am Ausgang des Schlammbehälters angeordneten Filtereinrichtung gefiltertem Wasser aus dem Schlammbehälter beaufschlagbaren Wasserbehälter und einem mittels einer Wasseraufbereitungseinrichtung eine durch eine saugseitig an den Wasserbehälter angeschlossene Niederdruckpumpe mit Wasser beaufschlagbare Zyklonanordnung enthält, die mit aufbereitetem Spülwasser aus dem Wasserbehälter beaufschlagbaren Wasservorlageraum für eine Hochdruckpumpe, durch die ein Räumschlauch mit Spülwasser beaufschlagbar ist.

Ein Kanalreinigungsfahrzeug dieser Art ist aus der DE 28 24 432 A1 bekannt. Bei dieser bekannten Anordnung ist eine vom Schlammbehälter zum Wasserbehälter führende Leitung vorgesehen, an deren schlammbehälterseitigem Eingang eine Filteranordnung angebracht ist. Um eine Strömung von Wasser vom Schlammbehälter zum Wasserbehälter zu bewerkstelligen, muss der Schlammbehälter mit Druck beaufschlagt werden. Während dieser Betriebsphase können hier jedoch keine Verunreinigungen aus dem Kanal aufgesaugt werden, da hierzu der Schlammbehälter evakuiert werden muss. Bei der bekannten Anordnung ist daher nur eine diskontunierliche Arbeitsweise möglich.

Bei einer anderen aus der EP 0047 519 A1 bekannten Anordnung ist im Schlammbehälter eine schwimmende Filteranordnung vorgesehen, von der eine Leitung zu einer ersten Niederdruckpumpe führt, welche das Wasser über eine Zyklonanordnung zum Wasserbehälter transportiert. Eine zweite Niederdruckpumpe ist an den Wasserbehälter angeschlossen und führt das Wasser über eine zweite Zyklonanordnung zum Vorlageraum für die Hochdruckpumpe. Hierbei ergibt sich ein hoher baulicher Aufwand da zwei Zyklonanordnungen und zwei Niederdruckpumpen benötigt werden.

Bei beiden Anordnungen oben genannter Art ist der im Schlammbehälter angeordnete Filter unablässig dem Inhalt des Schlammbehälters ausgesetzt. Die bekannten Anordnungen eignen sich daher nur zur Aufnahme solcher Schlämme, deren Wasser wieder aufbereitet werden kann. Es kommt aber auch nicht selten vor, dass andere Materialien entsorgt werden müssen, z.B. Rückstände von Fettabscheidern etc. die für eine Wiederaufbereitung des Wassers nicht in Frage kommen. Zur Abfuhr derartiger Materialien sind die bekannten Anordnungen daher nicht geeignet. Diese sind daher nicht universell verwendbar.

Hiervon ausgehend ist es daher die Aufgabe der vorliegenden Erfindung, eine Vorrichtung gattungsgemäßer Art so zu verbessern, dass trotzt einer vergleichsweise einfachen Bauweise ein kontinuierlicher Betrieb möglich ist und dass eine universelle Verwendbarkeit gewährleistet ist.

Diese Aufgabe wird erfindungsgemäß dadurch gelöst, dass der Schlammbehälter und der Wasserbehälter einander benachbart angeordnet und mittels einer Durchtrittsöffnung in einer gemeinsamen Trennwand strömungsmäßig miteinander verbunden sind und dass die am Ausgang des Schlammbehälters vorgesehene Filtereinrichtung eine der Durchtrittsöffnung zugeordnete Filterwand enthält, der schlammbehälterseitig ein an- und abstellbarer Deckel und gegenüberliegend eine Reinigungseinrichtung zugeordnet sind.

Bei abgestelltem Deckel, das heißt geöffneter Durchtrittsöffnung herrscht vor und hinter der Filterwand derselbe Druck, so dass sich im Schlammbehälter und im Wasserbehälter auch dieselbe Füllhöhe ergibt. Die Filterwand wird daher vom Wasser selbsttätig durchströmt. Eine Pumpe ist hierzu nicht erforderlich. Dies erleichtert in vorteilhafter Weise auch die Filterreinigung, da diese nicht gegen den Saugzug bzw. Druck einer Pumpe arbeiten muss. Der von der zugeordneten Filterwand abgehobene Deckel muss vom vorbeiströmenden Wasser umströmt werden, wodurch sich der Strömungsweg verlängert. Außerdem wird dadurch bewirkt, dass die Filterwand nicht nur im Bereich ihres Zentrums, sondern auch am Rand durchströmt wird, was zu einem großen Strömungsquerschnitt und damit zu einer vergleichsweise geringen Strömungsgeschwindigkeit führt. Diese beiden Faktoren begünstigen in vorteilhafter Weise die Setimentation im Schlammbehälter. Bereits kleinere Teilchen setzen sich daher in vorteilhafter Weise bereits im Schlammbehälter ab, womit der Filter entlastet wird. Dieser Vorteil wird dadurch noch verstärkt, dass der Volumendurchsatz durch die Filterwand vom Volumendurchsatz durch die Zyklonanordnung unabhängig ist. Der Volumendurchsatz durch die Filterwand braucht lediglich dem Fördervolumen der Hochdruckpumpe entsprechen, das gegenüber dem Durchsatz durch die Zyklonanordnung vergleichsweise gering sein kann. Infolge des gegenüber dem Fördervolumen der Hochdruckpumpe vergleichsweise hohen Volumendurchsatzes durch die Zyklonanordnung kann in vorteilhafter Weise ein mehrfacher Durchgang des Wassers durch die Zyklonanordnung und damit ein hoher Reinigungsgrad erreicht werden. Bei angestelltem Deckel ist die Filterwand in vorteilhafter Weise dem Inhalt des Schlammbehälters nicht ausgesetzt. Es ist daher in vorteilhafter Weise möglich, auch solche Materialien aufzunehmen, die für eine Wasseraufbereitung nicht geeignet sind und Inhaltsstoffe enthalten, die auf einer Deponie abgelagert oder in den Kanal zurückgeführt werden sollen, z.B. Fett oder Schwimmstoffe. Gleichzeitig steht hierbei aber der komplette Inhalt des Wasserbehälters und des Wasservorlageraums zur Spülung zur Verfügung.

Vorteilhafte Ausgestaltungen und zweckmäßige Fortbildungen der übergeordneten Maßnahmen sind in den Unteransprüchen angegeben.

Vorteilhaft kann die dem Deckel zugeordnete Betätigungseinrichtung an einer im Schlammbehälter angeordneten als Sieb ausgebildeten Trennwand angebracht sein. Dies ermöglicht eine kompakte und stabile Bauweise sowie eine einfache Verwirklichung einer axialen Stellbewegung zur An- und Abstellung des Deckels. Durch die Siebwand ergibt sich auch eine Entlastung der Filterwand.

Eine weitere vorteilhafte Maßnahme kann darin bestehen, dass sowohl der Schlammbehälter als auch der Wasserbehälter über absperrbare Anschlüsse an eine Vakuumpumpe anschließbar sind. Hierdurch ist sichergestellt, dass auch bei einem hohen Füllstand, bei dem die Filterwand vollständig überflutet ist, beim Aufsaugen von Schlamm durch Evakuierung des Schlammbehälters die erwünschte Druckgleichheit im Schlammbehälter und im Wasserbehälter erreicht werden kann.

In weiterer Fortbildung der übergeordneten Maßnahmen kann die saugseitig am Wasserbehälter liegende Niederdruckpumpe zweckmäßig tiefer als der Wasserbehälter angeordnet sein, was die Füllung der Pumpenräume begünstigt. Dieser Vorteil kann dadurch noch verstärkt werden, dass die zur Saugseite der Niederdruckpumpe führende Fallleitung eine größere lichte Weite aufweist als der Pumpeneingang.

In weiterer Fortbildung der übergeordneten Maßnahmen kann eine der Zyklonanordnung zugeordnete, auf- und absteuerbare Umgehungsleitung vorgesehen sein. Hierdurch ist es möglich, die Zyklonanordnung abzuschalten, falls diese nicht benötigt werden sollte.

Zweckmäßig ist der Volumendurchsatz der Niederdruckpumpe größer als der Volumendurchsatz der Hochdruckpumpe. Dies ermöglicht einen mehrfachen Durchlauf des Wassers durch die Zyklonanordnung und damit einen hohen Reinigungsgrad.

In weiterer Fortbildung der übergeordneten Maßnahmen kann der Wasservorlageraum mit dem Wasserbehälter durch eine Übertrittsöffnung verbunden sein, der ein einstellbares Rückschlagventil zugeordnet ist. Hierdurch wird sichergestellt, dass überschüssiges Wasser aus dem Wasservorlageraum in den Wasserbehälter überlaufen kann, wobei mit Hilfe des einstellbaren Rückschlagventils ein für die Hochdruckpumpe geeigneter Druck einstellbar ist.

Vorteilhaft kann der Übertrittsöffnung, die sich zweckmäßig im Scheitelbereich des Wasserbehälters befindet, eine bis zum Boden des Wasservorlageraums reichende Zulaufleitung zugeordnet sein. Hierdurch wird erreicht, dass in den Wasservorlageraum gelangende Verunreinigungen, die sich auf dem Boden absetzen, vom in den Wasserbehälter überströmenden Wasser mitgerissen und so in den Wasserbehälter zurückgeführt werden.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine schaltbildartige Darstellung einer erfindungsgemäßen Vorrichtung und
- Figur 2: eine Darstellung der Strömungsverhältnisse im Bereich der Filterwand bei abgehobenem Deckel.

Hauptanwendungsgebiet der vorliegenden Erfindung sind Kanalreinigungsfahrzeuge. Derartige Fahrzeuge enthalten wenigstens einen auf ihrer Chassis angeordneten Behälter zur Bereitstellung von Spülwasser zur Lockerung der im Kanal abgelagerten Sedimente sowie zur Aufnahme von aus dem Kanal aufgesaugtem Schlamm, das heißt einer Mischung von Wasser und von diesem mitgeführten Verunreinigungen in Form von-Sand; Kies etc.. Auf oder am Behälter ist eine vorzugsweise durch eine liegende Haspel gebildete Aufnahmeeinrichtung für einen in den Kanal absenkbaren, mit Saugzug beaufschlagbaren und an den Schlammbehälter angeschlossenen Saugschlauch vorgesehen, der mittels eines ebenfalls auf oder am Behälter angebrachten, schwenkbar gelagerten, vorzugsweise teleskopierbaren Auslegers manövrierbar ist. Am vorstehend genannten Ausleger kann eine Haspel für einen in den Kanal absenkbaren, mit Spülwasser beaufschlagbaren Räumschlauch zum Lockern der Ablagerungen angebracht sein. Das Spülwasser wird mit Hilfe einer Aufbereitungseinrichtung aus dem aus dem Kanal aufgesaugten Schlammwasser gewonnen.

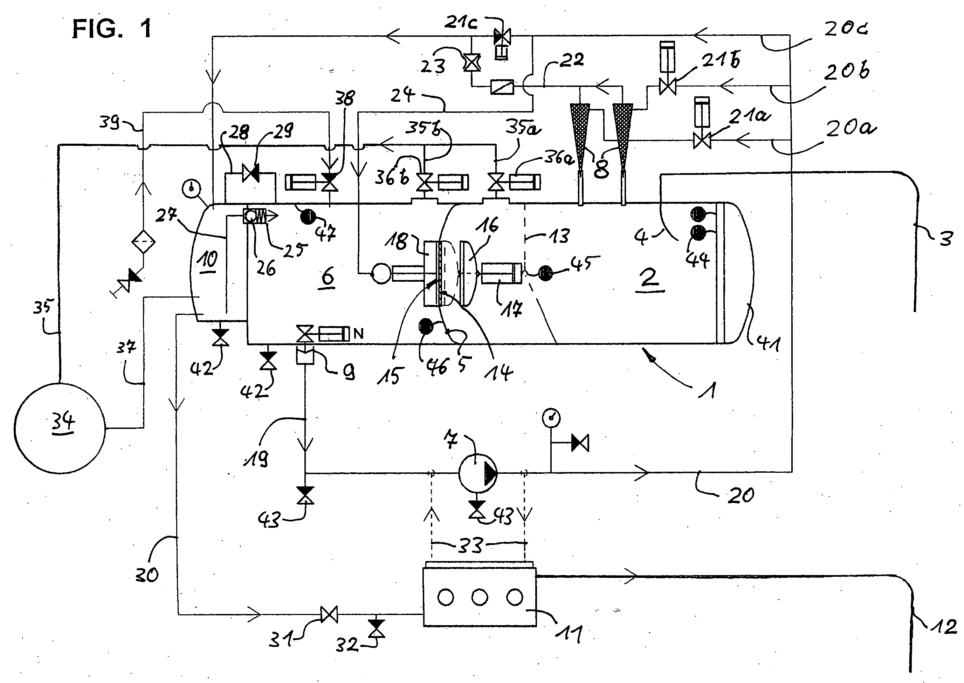

In Figur 1 ist ein auf einer nicht näher dargestellten Fahrzeugschassis aufnehmbares einen genannten Behälter bildendes Fass 1 dargestellt, das einen Schlammbehälter 2 enthält, in den ein mit einem Saugschlauch 3 verbundener, scheitelseitig angeordneter Einwurfstutzen 4 hineinführt. Das Fass 1 enthält ferner einen im Anschluss an den Schlammbehälter 2 angeordneten, durch eine gemeinsame Trennwand 5 hiervon abgeteilten Wasserbehälter 6, der mit einem nach unten abgehenden, einer Niederdruckpumpe 7, die Zyklonanordnung 8 mit Wasser beaufschlagt, zugeordneten Wasserausgang 9 versehen ist. Neben oder hinter dem Wasserbehälter 6 befindet sich ein mit dem sauberen Überlaufwasser der Zyklonanordnung 8 beaufschlagbarer Wasservorlageraum 10, an den die Saugseite einer Hochdruckpumpe 11 angeschlossen ist, durch die ein Räumschlauch 12 mit Spülwasser beaufschlagbar ist.

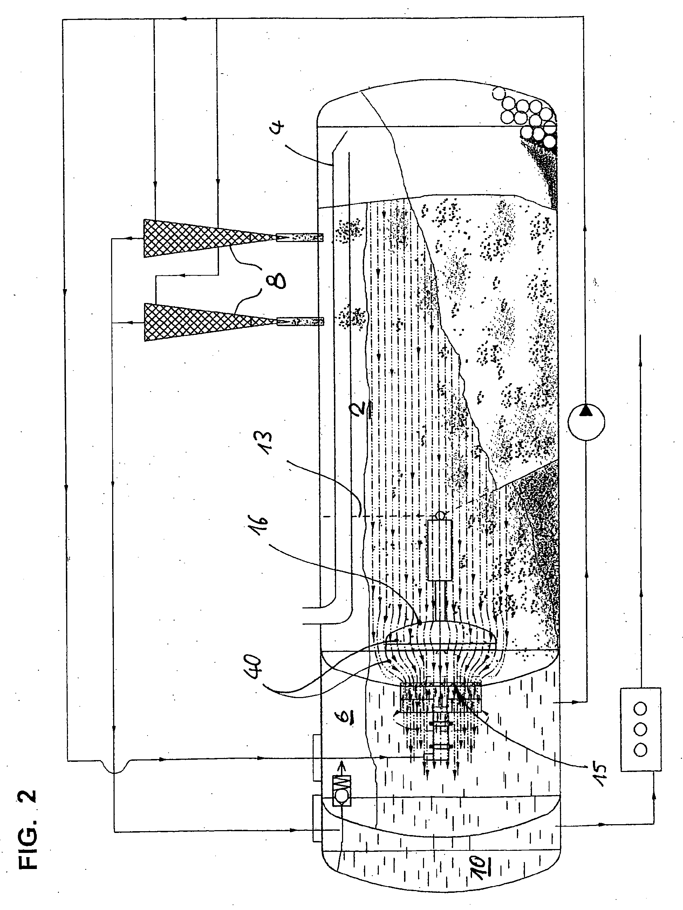

Der Schlammbehälter 2 ist durch eine Siebwand 13, deren unterer Bereich schwenkbar ist, in ein dem Einwurfstutzen 4 zugeordnetes Abteil und ein dem Wasserbehälter 6 benachbartes Abteil unterteilt. Durch die Siebwand 13 werden gröbere Verunreinigungen im dem Einwurfstutzen 4 zugeordneten Eingangsabteil zurückgehalten. In das benachbarte Abteil gelangt daher nur auf diese Weise bereits grob vorgereinigtes Wasser, wie in Figur 2 angedeutet ist.

In der gemeinsamen Trennwand 5 zwischen Schlammbehälter 2 und Wasserbehälter 6 ist eine durch eine Filterwand 14 ausgefachte Durchtrittsöffnung 15 vorgesehen, die eine Strömungsverbindung zwischen den beiden Behältern bildet und über die der Wasserbehälter 6 mit gefiltertem Wasser aus dem benachbarten Abteil des Schlammbehälters 2 beaufschlagt wird. Die Durchtrittsöffnung 15 kann als kreisförmiges Fenster ausgebildet sein, dessen Durchmesser etwa einem Drittel des Fassdurchmessers entsprechen kann. Die Filterwand 14 besteht zweckmäßig aus einem tragenden Siebblech, auf dem ein durch ein feines Netz- bzw. Maschenwerk gebildetes Filtermaterial befestigt ist. Die Maschenweite des Filtermaterials ist zweckmäßig kleiner als 0,5 mm, vorzugsweise kleiner als 0,1.

Der Durchtrittsöffnung 15 ist schlammbehälterseitig ein beweglicher Deckel 16 zugeordnet, mittels dessen die Durchtrittsöffnung 15 verschließbar und die Filterwand 14 abdeckbar sind. Der Deckel 16 kann als Schwenkdeckel ausgebildet sein. Im dargestellten, bevorzugten Beispiel ist der Deckel 16 axial verschiebbar angeordnet. Zur Bewegung des Deckels 16 ist ein Zylinderaggregat 17 vorgesehen, das vorteilhaft am stationären Teil der Trennwand 13 angebracht sein kann. Auf der dem Deckel 16 gegenüberliegenden, wasserbehälterseitigen Seite der Filterwand 14 ist eine dieser zugeordnete Reinigungseinrichtung vorgesehen. Dabei kann es sich um einen um eine zur Filterwand 14 normale Achse rotierbaren Sprühbalken 18 handeln, der mit von der Niederdruckpumpe 7 geliefertem Wasser beaufschlagbar ist. Die Düsen des Sprühbalkens 18 sind schräg angeordnet, so dass eine Drehbewegung bewerkstelligt wird. Die aus den Düsen des Sprühbalkens 18 austretenden Wasserstrahlen drängen in die Filterwand 14 eindringende Verunreinigungen in den Schlammbehälter 2 zurück.

Das über die Filterwand 14 in den Wasserbehälter 6 gelangende, durch Siebung und Filterung bereits vorgereinigte Wasser wird mittels der oben erwähnten Zyklonanordnung 8 weiter aufbereitet. Die Zylinderanordnung 8 enthält zweckmäßig mehrere Zyklone, wenngleich man in einfachen Fällen auch mit einem Zyklon auskommen kann. Im dargestellten Beispiel sind zwei strömungsmäßig parallel geschaltete Zyklone vorgesehen. Diese münden mit ihrem Schmutzausgang in das erste, dem Einwurfstutzen 4 zugeordnete Abteil des Schlammbehälters 2. Der Wassereingang der Zyklone ist mit der Druckseite der Niederdruckpumpe 7 verbunden. Der Überlauf der Zyklone, über den gereinigtes Wasser abgeführt wird, geht zum Wasservorlageraum 10.

Die saugseitig mit dem Wasserbehälter 6 verbundene Niederdruckpumpe 7 befindet sich niveaumäßig unterhalb der unteren Sohle des Wasserbehälters 6, so dass sich ein Gefälle der vom Wasserausgang 9 des Wasserbehälters 6 zum Eingang der Niederdruckpumpe 7 führenden Zuleitung 19 ergibt. Zweckmäßig besitzt diese auch einen größeren lichten Querschnitt als der Eingang der Niederdruckpumpe 7, was auch im Falle einer Druckabsenkung bzw. eines Unterdrucks im Wasserbehälters 6 zu einer zuverlässigen Füllung der Pumpenräume der Niederdruckpumpe 7 führt. Im dargestellten Beispiel ist der mittels eines Schiebers absperrbare Wasserausgang 9 im Bereich der Sohle des Wasserbehälters 6 angeordnet. Es wäre aber auch denkbar, dem bodenseitig vorgesehenen Wasserausgang 6 einen mit einem Schwimmer versehenen, beweglichen Einlaufstutzen zuzuordnen, über den geklärtes Oberflächenwasser aus dem Wasserbehälter 6 entnehmbar ist. Der Eingang eines derartigen Einlaufstutzens kann mit einem Filter versehen sein, dem eine Reinigungseinrichtung zugeordnet sein kann.

Die von der Niederdruckpumpe 7 abgehende Druckleitung 20 ist in eine der Anzahl der Zyklone der Zyklonanordnung 8 entsprechende Zahl von zu den Zyklonen führenden Zweigleitungen 20a, 20b und eine unter Umgehung der Zyklonanordnung 8 direkt zum Wasservorlageraum 10 führende Zweigleitung 20c aufgezweigt. Die Zweigleitungen 20a, b, c sind mittels zugeordneter Absperrorgange 21 a, b, c absperrbar. Die Absperrung der zu den Zyklonen führenden Zweigleitungen 20a, b und der die Zyklonanorcfnung 8 umgehenden Zweigleitung 20c erfolgt gegenläufig, so dass das von der Niederdruckpumpe 7 gelieferte Wasser wahlweise entweder über die Zyklone der Zyklonanordnung 8 geschickt oder direkt in den Wasservorlageraum 10 eingespeist werden kann. Dem Überlauf der Zyklone der Zyklonanordnung 8 kann eine eigene, zum Wasservorlageraum 10 führende Leitung zugeordnet sein. Im dargestellten Beispiel mündet der Überlauf der Zyklone der Zyklonanordnung 8 stromabwärts vom Absperrorgan 21c in die Zweigleitung 20c ein. In der hierzu vorgesehenen Überlaufleitung 22 ist eine einstellbare Drossel 23 angeordnet, mittels welcher ein von den Zyklonen benötigter Rückstau einstellbar ist.

Stromaufwärts vom Absperrorgan 21c geht von der Zweigleitung 20c eine zur Reinigungseinrichtung 18 führende Versorgungsleitung 24 ab. Hierdurch ist sichergestellt, dass die Reinigungseinrichtung 18 unabhängig von der Stellung der Absperrorgane 21 a, b, c mit von der Niederdruckpumpe 7 aus dem Wasserbehälter 6 entnommenem Wasser versorgt wird. In der Zyklonanordnung 8 bereits aufbereitetes Wasser wird daher für die Reinigungseinrichtung 18 nichtverbraucht.

Die Hochdruckpumpe 11, bei der es sich um eine Kolbenpumpe mit keramischen Kolben handeln kann, ist in der Regel mit einer Wasserkühlung versehen. Hierzu ist eine von der Druckleitung 20 der Niederdruckpumpe abzweigende und in die Saugleitung 19 der Niederdruckpumpe 7 einmündende Kühlleitung 33 vorgesehen. Aufgrund des Druckgefälles zwischen Druck- und Saugseite der Niederdruckpumpe 7 ergibt sich ein selbsttätiger Durchfluss durch die Kühlleitung 33.

Die Niederdruckpumpe 7 ist so dimensioniert, dass sie einen größeren Volumendurchsatz aufweist als die Hochdruckpumpe 11. Auch während eines Betriebs der Hochdruckpumpe 11 wird daher mehr Wasser in den Wasservorlageraum 10 eingespeist als hieraus entnommen wird. Das überschüssige Wasser gelangt zurück in den Wasserbehälter 6, aus welchem es mittels der Niederdruckpumpe 7 entnommen und über die Zyklonanordnung in den Wasservorlageraum 10 zurückgepumpt werden kann. Aufgrund der genannten Differenz der Volumendurchsätze von Niederdruckpumpe 7 und Hochdruckpumpe 11 ergibt sich daher in vorteilhafter Weise ein mehrfacher Durchlauf des Wassers durch die Zyklonanordnung 8 und damit ein besonders guter Reinigungseffekt.

Zur Rückführung des überschüssigen Wassers in den Wasserbehälter 6 ist er Wasservorlageraum 10 ist mit dem benachbarten Wasserbehälter 6 durch eine in einer gemeinsamen Trennwand angeordnete Übertrittsöffnung 25 verbunden, der ein einstellbares, entgegen der vom Wasservorlageraum 10 zum Wasserbehälter 6 führenden Strömungsrichtung schließendes Rückschlagventil 26 zugeordnet ist. Anstelle einer Übertrittsöffnung könnte selbstverständlich auch eine entsprechende Leitung vorgesehen sein, so dass keine gemeinsame Trennwand benötigt würde und die beiden Räume voneinander distanziert sein könnten. Das einstellbare Rückschlagventil ist in Figur 1 als federbelastetes Kugelventil ausgebildet. Es wäre aber auch der Einsatz einer mit einem verstellbaren Gewicht versehenen Klappe etc. denkbar. Die Übertrittsöffnung 25 befindet sich im dargestellten Beispiel im Scheitelbereich des Wasservorlageraums 10. Um in den Wasservorlageraum 10 gelangende Schmutzteilchen, die sich bodenseitig absetzen, aus dem Wasservorlageraum 10 zu entfernen, kann der Übertrittsöffnung 25 ein bis zum Boden des Wasservorlageraums 10 reichender Zulauf 27 zugeordnet sein. Die hierin sich ausbildende Strömung sorgt dafür, dass auf dem Boden des Wasservorlageraums 10 vorhandene Ablagerungen mitgerissen werden. Das der Übertrittsöffnung 25 zugeordnete Rückschlagventil 26 wird so eingestellt, dass im Wasservorlageraum 10 ein für die saugseitig hieran angeschlossene Hochdruckpumpe 11 geeigneter Druck aufrechterhalten wird.

In der Praxis kann es vorkommen, dass infolge der Funktion der Zyklone der Zyklonanordnung 8 geringere Luftmengen in den Wasservorlageraum 10 gelangen. Dieser ist daher mittels einer scheitelseitig vorgesehenen Entlüftungsleitung 28 mit dem Wasserbehälter 6 verbunden. Der Entlüftungsleitung 28 kann ein Ventil 29 zugeordnet sein, mittels dessen der Querschnitt so einstellbar ist, dass im Wasservorlageraum 10 der gewünschte Druck erhalten bleibt.

Die den Räumschlauch 12 beaufschlagende Hochdruckpumpe 11 ist, wie schon erwähnt, saugseitig an den Wasservorlageraum 10 angeschlossen. Die hierzu vorgesehene Saugleitung 30 geht vom bodennahen Bereich des Wasservorlageraums 10 ab. Für Wartungs- und Instandhaltungsarbeiten an der Hochdruckpumpe 11 können die Saugleitung 30 abgesperrt und die Hochdruckpumpe 11 entwässert werden, wie durch die Ventile 31, 32 angedeutet ist. Dasselbe gilt natürlich auch für die Niederdruckpumpe 7.

Zur Aktivierung der Saugleitung 3 zum Aufsaugen von Schlamm kann eine Wasserstrahlpumpe etc. vorgesehen sein. In der Regel wird die Saugleitung 3 jedoch dadurch aktiviert, dass der strömungsmäßig hiermit verbundene Schlammbehälter 2 evakuiert wird. Eine derartige Ausführung liegt auch der Figur 1 zugrunde. Hierzu ist eine Vakuumpumpe 34 vorgesehen, die mit zugeordneten, scheitelseitigen Anschlüssen 35a, b des Schlammbehälters 2 und des Wasserbehälters 6 verbunden ist. Die Anschlüsse 35a, b sind mittels zugeordneter Absperrorgane 36a, b absperrbar. Zur Aktivierung der Saugleitung genügt es, wenn nur der Schlammbehälter 2 evakuiert wird. Im dargestellten Beispiel sind sowohl der Schlammbehälter 2 als auch der Wasserbehälter 6 evakuierbar, was in vorteilhafter Weise gleiche Druckverhältnisse vor und hinter der Filterwand 14 ergibt, auch wenn diese bereits vollständig überflutet ist. Solange dies nicht der Fall ist, ergibt sich ohnehin in beiden Behältern derselbe Druck. Die Vakuumpumpe 34 ist zweckmäßig als Wasserringpumpe ausgebildet, die mit Hilfe von Wasser abgedichtet wird. Dieses wird aus dem Vorlageraum 10 entnommen, wie durch eine Versorgungsleitung 37 angedeutet ist.

Vor Betriebsbeginn wird der Wasserbehälter 6 mit Wasser gefüllt. Hierzu ist ein mittels eines Absperrorgans 38 absperrbarer Füllstutzen 39 vorgesehen. In der Regel besteht diese erste Wasserfüllung aus Leitungswasser. Durch Inbetriebnahme der Niederdruckpumpe 7 wird hiermit auch der Wasservorlageraum 10 beaufschlagt. Da es sich dabei um sauberes Wasser handelt, kann dabei die Zyklonanordnung 8 außer Betrieb bleiben. Dementsprechend sind die Absperrorgane 21a, b geschlossen und das Absperrorgan 21c geöffnet. Um ein Entweichen des sauberen Wassers in den Schlammbehälter 2 zu verhindern, ist in dieser ersten Betriebsphase der Deckel 16 in seiner Schließstellung.

Im Laufe des Kanalreinigungsbetriebs wird das zusammen mit Verunreinigungen aus dem Kanal aufgesaugte Wasser aufbereitet und dem Wasserbehälter 6 zugeführt. Die Aufbereitung des Wassers erfolgt in mehreren Stufen, nämlich Siebung mittels der Seibwand 13, Filterung mittels der Filterwand 14 sowie mechanische Reinigung mittels der Zyklonanordnung 8. Eine weitere Reinigungsstufe wird durch die mit Hilfe des der Filterwand 14 zugeordneten Deckels 17 bewirkte Sedimentation erreicht, wie in Figur 2 angedeutet ist.

Der Deckel 16 ist nach Art einer eine konkave Außenseite aufweisenden Kappe ausgebildet. Diese Kappe bildet einen im Schlammbehälter 2 angeordneten Staukörper, der von dem vom Schlammbehälter 2 durch die Filterwand 14 hindurch in den Wasserbehälter 6 hinüberströmenden Wasser umströmt werden muss, wie in Figur 2 durch Strömungslinien 40 angedeutet ist. Aufgrund der dabei erfolgenden Umlenkung der Strömung ergibt sich, wie Figur 2 anschaulich zeigt, eine Beaufschlagung der Filterwand 14 nicht nur im zentralen Bereich, sondern auch in den Randbereichen, so dass insgesamt eine große Fläche genutzt wird und damit ein großer Strömungsquerschnitt vorhanden ist, was eine vergleichsweise geringe Strömungsgeschwindigkeit ergibt. Hierdurch wird bewirkt, dass im Bereich vor der Filterwand 14 bereits eine vergleichsweise starke Sedimentation im Schlammbehälter 2 stattfindet. Dies wird dadurch noch verstärkt, dass sich aufgrund der vorstehend erwähnten Umlenkung auch eine Verlängerung des Strömungswegs ergibt und zudem der Volumendurchsatz durch die Filterwand 14 nicht durch Druckbeaufschlagung des Schlammbehälters 2 erfolgt, sondern durch selbsttätigen Niveauausgleich und dass der erforderliche Volumendurchsatz durch die Filterwand 14 nur dem vergleichsweise geringen Volumendurchsatz durch die Hochdruckpumpe 11 entspricht und nicht dem vergleichsweise hohen Volumendurchsatz durch die Niederdruckpumpe 7.

Die im Schlammbehälter 2 zurückbleibenden Verunreinigungen werden von Zeit zu Zeit entfernt. Hierzu ist dem Schlammbehälter 2 hierzu eine Entleerungseinrichtung zugeordnet. Im dargestellten Beispiel ist der Schlammbehälter 2 mit einem der Trennwand 5 gegenüberliegenden, schwenkbaren Deckel 41 versehen. Zum Entleeren des Schlaxnmbehälters 2 werden der Deckel 41 in eine Öffnungsstellung gebracht und das Fass 1 so gekippt, dass der Inhalt des Schlammbehälters 2 über die vom Deckel 41 freigegebene Öffnung herausfällt. Anstelle einer Kippung des Fasses 1 wäre es aber auch denkbar, einen Ausschubkolben vorzusehen. Hierzu könnte beispielsweise die Trennwand 5 als bewegbarer Ausschubkolben ausgebildet sein.

Der Wasserbehälter 6 und der Wasservorlageraum 10 sind für Reinigungszwecke sowie zur Vermeidung eines Einfrierens entleerbar. Hierzu sind mit Absperrorganen versehene Ablassstutzen 42 vorgesehen. Ähnliche Ablassstutzen 43 sind auch der Saugleitung 19 der Niederdruckpumpe 7 sowie dieser selbst zugeordnet. Der Ablassstutzen 32 der Saugleitung 30 der Hochdruckpumpe 11 wurde bereits oben erwähnt.

Zur Gewährleistung einer automatischen Betriebsweise sind im Schlammbehälter 2 und Wasserbehälter 6 Schwimmerschalter 44, 45, 46, 47 vorgesehen. Mit Hilfe der Schwimmerschalter 44 wird der Saugbetrieb abhängig vom Wasserstand im Schlammbehälter 2 ein- bzw. ausgeschaltet. Mit Hilfe des Schwimmerschalters 45 wird der Deckel 16 von der Filterwand 14 abgehoben, sobald im Schlammbehälter 2 ein ausreichender Wasserstand vorhanden ist und umgekehrt. Mit Hilfe des im Wasserbehälter 6 bodenseitig vorgesehenen Schwimmerschalters 46 werden die Niederdruckpumpe 7 und vorzugsweise auch die Hochdruckpumpe 11 wegen Wassermangels stillgesetzt. Mit Hilfe des im Wasserbehälter 6 scheitelseitig angeordneten Schwimmerschalters 47 wird eine weitere Beaufschlagung des Wasserbehälters 6 unterbrochen entweder durch Verschließen der Durchtrittsöffnung 15 mittels des Deckels 16 und/oder durch Unterbrechen des Saugbetriebs und einer weiteren Beaufschlagung des Schlammbehälters 2.

Die dem Deckel 16 zugeordnete Betätigungseinrichtung 17 kann auch manuell betätigt werden. So ist es beispielsweise möglich, den Deckel 16 in eine Schließstellung zu bringen und damit die Filterwand 14 gegen Verunreinigungen zu schützen, sofern die vorliegende Vorrichtung zur Aufnahme und Abfuhr von für eine Wasseraufbereitung ungeeigneten Substraten, beispielsweise fetthaltigen oder klebstoffhaltigen Flüssigkeiten etc. Verwendung finden soll. Dies gewährleistet eine universelle Verwendbarkeit. Ebenso ist der Deckel 16 geschlossen, wenn vor Beginn eines Kanalreinigungsbetriebs der Wasserbehälter 6 mit Leitungswasser gefüllt ist, der Schlammbehälter 2 dagegen noch leer ist.

## Patentansprüche

1. Vorrichtung zur Kanal- und/oder Grubenreinigung, insbesondere Kanalreinigungsfahrzeug, mit einem vorzugsweise evakuierbaren, mit aufsaugbarem Schlamm beaufschlagbaren Schlammbehälter (2), einem mittels einer am Ausgang des Schlammbehälters (2) angeordneten Filtereinrichtung (14) mit gefiltertem Wasser aus dem Schlammbehälter (2) beaufschlagbaren Wasserbehälter (6) und einem mittels einer Wasseraufbereitungseinrichtung, die eine durch eine saugseitig an den Wasserbehälter (6) angeschlossene Niederdruckpumpe (7) mit Wasser beaufschlagbare Zyklonanordnung (8) enthält, mit aufbereitetem Spülwasser aus dem Wasserbehälter (6) beaufschlagbarem Wasservorlageraum (10) für eine Hochdruckpumpe (11), durch die ein Räumschlauch (12) mit Spülwasser beaufschlagbar ist, **dadurch gekennzeichnet, dass** der Schlammbehälter (2) und der Wasserbehälter (6) einander benachbart angeordnet und mittels einer Durchtrittsöffnung (15) in einer gemeinsamen Trennwand (5) strömungsmäßig miteinander verbunden sind und dass die am Ausgang des Schlammbehälters (2) vorgesehene Filtereinrichtung eine der Durchtrittsöffnung (15) zugeordnete Filterwand (14) enthält, der schlammbehälterseitig ein an- und abstellbarer Deckel (16) und gegenüberliegend eine Reinigungseinrichtung (18) zugeordnet sind.

2. Vorrichtung nach Anspruch 1, **dadurch gekennzeichnet, dass** der Schlammbehälter (2) mittels einer Siebwand (13) unterteilt ist, wobei in ein erstes Abteil ein mit einem Saugschlauch (3) kommunizierender Einwurfstutzen (4) einmündet und das zweite Abteil die Filterwand (14) und den dieser zugeordneten Deckel (16) enthält, dem eine an einem stationären Bereich der Siebwand (13) angebrachte Betätigungseinrichtung (17) zugeordnet ist, mittels welcher der Deckel (16), der vorzugsweise als Haube mit konvexer Außenseite ausgebildet ist, in axialer Richtung verstellbar ist.

3. Vorrichtung nach einem der vorhergehenden Ansprüche, **dadurch gekennzeichnet, dass** der Schlammbehälter (2) und der Wasserbehälter (6) an eine Vakuumpumpe (34) anschließbar sind, wobei die saugseitig mit dem Wasserbehälter (6) verbundene Niederdruckpumpe (7) niveaumäßig tiefer als die Sohle des Wasserbehälters (6) angeordnet ist und wobei die vom Wasserausgang (9) des Wasserbehälters (6) zum Eingang der Niederdruckpumpe (7) führende Leitung einen größeren lichten Querschnitt als der Eingang der Niederdruckpumpe (7) aufweist.

4. Vorrichtung nach einem der vorhergehenden Ansprüche, **dadurch gekennzeichnet, dass** die von der Niederdruckpumpe (7), deren Volumendurchsatz vorzugsweise größer als der Volumendurchsatz durch die Hochdruckpumpe (11) ist, abgehende Leitung (20) einen die Zyklonanordnung (8) umgehenden Ast (20c) aufweist, der gegenläufig zum Eingang der Zyklonanordnung (8) auf- bzw. absperrbar ist und dass die Reinigungseinrichtung (18) die vorzugsweise einen durch Rückstoßwirkung rotierbaren Sprühbalken enthält, mittels der Niederdruckpumpe (7) mit an der Zykloneinrichtung (8) vorbeigeleitetem Wasser beaufschlagbar ist.

5. Vorrichtung nach einem der vorhergehenden Ansprüche, **dadurch gekennzeichnet, dass** der Wasservorlageraum (10) mit dem Wasserbehälter (6) durch einen Überlauf (25), dem ein einstellbares Rückschlagventil (26) zugeordnet ist und vorzugsweise mittels einer ab- bzw. einstellbaren Entlüftungsleitung (28) miteinander verbunden sind und dass der Überlauf (25) im Scheitelbereich des Wasservorlageraums (10) angeordnet und mit einem vom Boden des Wasservorlageraums (10) abgehenden Zulaufstutzen (27) versehen ist.

6. Vorrichtung nach einem der vorhergehenden Ansprüche, **dadurch gekennzeichnet, dass** der Wasserbehälter (6), dem ein absperrbarer Füllstutzen (39) zugeordnet ist, und der Wasservorlageraum (10) über absperrbare Ablassstutzen (42) entleerbar sind und dass der Schlammbehälter (2) mittels eines stirnseitigen Deckels (41) verschließbar ist, der zum Entleeren des Schlammbehälters (2) in eine Öffnungsstellung bringbar ist.

7. Vorrichtung nach einem der vorhergehenden Ansprüche, **dadurch gekennzeichnet, dass** die Hochdruckpumpe (11), die vorzugsweise als mit Wasser aus dem Wasservorlageraum (10) versorgbare Wasserringpumpe ausgebildet ist, mit einer Wasserkühlung versehen ist und dass eine von der Druckseite der Niederdrukpumpe (7) ab- und in die Saugseite der Niederdruckpumpe (7) einmündende Kühlleitung (33) vorgesehen ist.

8. Vorrichtung nach einem der vorhergehenden Ansprüche, **dadurch gekennzeichnet, dass** die Zyklonanordnung (8) mehrere, vorzugsweise zwei strömungsmäßig parallel geschaltete Zyklone aufweist, denen absperrbare Wasserzuleitungen zugeordnet sind und dass der Schmutzauswurf der Zyklone der Zyklonaordnung (8) in das dem Einwurfstutzen (4) zugeordnete Eingangsabteil des Schlammbehälters (2) münden.

9. Vorrichtung nach einem der vorhergehenden Ansprüche, **dadurch gekennzeichnet, dass** der Schlammbehälter (2), der Wasserbehälter (6) und der Wasservorlageraum (10) hintereinander in einem Fass (1) angeordnet sind.
